# FASCICULE DE BREVET EUROPEEN

(11) **EP 3 724 004 B1**
(45) Date de publication et mention de la délivrance du brevet: **20.07.2022**
(21) Numéro de dépôt: 18833454.4
(22) Date de dépôt: 07.12.2018
(51) Int. Cl.: B60C 9/02, B60C 9/17, B60C 19/00, B60C 5/22

(54) **PNEUMATIQUE POUR VEHICULE AVEC STRUCTURE DE RIGIDIFICATION DANS LA CAVITE TORIQUE INTERIEURE**
FAHRZEUGLUFTREIFEN MIT VERSTÄRKUNGSSTRUKTUR IM UNTEREN TORISCHEN HOHLRAUM
PNEUMATIC TYRE FOR VEHICLE WITH REINFORCING STRUCTURE IN THE LOWER TORIC CAVITY

(30) Priorité: 11.12.2017 FR 1761883
(43) Date de publication de la demande: 21.10.2020
(73) Titulaire: COMPAGNIE GENERALE DES ETABLISSEMENTS MICHELIN, 63000 Clermont-Ferrand (FR)
(72) Inventeur: GIRARD, Mathieu, 63040 CLERMONT FERRAND Cedex 9 (FR); DAVAL, Bertrand, 63040 CLERMONT-FERRAND Cedex 9 (FR)
(74) Mandataire: Desbordes, Guillaume
(86) Numéro de dépôt international: PCT/FR2018/053147
(87) Numéro de publication internationale: WO 2019/115917

(56) Documents cités:
- WO-A1-2019/092343
- FR-A1- 2 638 398
- GB-A- 2 299 554
- JP-A- 2015 077 922

## Description

L'invention a pour objet un pneumatique radial destiné à équiper un véhicule.

Le domaine de pneumatique plus particulièrement étudié est celui des pneumatiques de tourisme dont la section méridienne est caractérisée par une largeur de section S et une hauteur de section H, au sens de la norme de la European Tyre and Rim Technical Organisation ou « ETRTO », telles que le rapport H/S, exprimé en pourcentage, est au plus égal 65, et la largeur de section S est au moins égale à 195 mm. En outre le diamètre au seat D, définissant le diamètre de la jante de montage du pneumatique, est au moins égal à 15 pouces, et généralement au plus égal à 21 pouces. L'exemple plus particulièrement étudié, dans le cadre de l'invention, est un pneumatique de dimension 205/55R16.

Toutefois un pneumatique selon l'invention peut également être utilisé sur tout autre type de véhicule tel qu'un véhicule à deux roues, un véhicule poids lourd, agricole, de génie civil ou un avion et, plus généralement, sur tout dispositif roulant.

Dans ce qui suit, et par convention, les directions circonférentielle XX', axiale YY' et radiale ZZ' désignent respectivement une direction tangente à la surface de roulement du pneumatique selon le sens de rotation du pneumatique, une direction parallèle à l'axe de rotation du pneumatique et une direction perpendiculaire à l'axe de rotation du pneumatique. Par «radialement intérieur », respectivement « radialement extérieur», on entend «plus proche de l'axe de rotation du pneumatique », respectivement «plus éloigné de l'axe de rotation du pneumatique». Par «axialement intérieur », respectivement « axialement extérieur», on entend «plus proche du plan équatorial du pneumatique», respectivement « plus éloigné du plan équatorial du pneumatique», le plan équatorial XZ du pneumatique étant le plan passant par le milieu de la surface de roulement du pneumatique et perpendiculaire à l'axe de rotation du pneumatique.

De façon générale, un pneumatique comprend un sommet ayant deux extrémités axiales prolongées chacune, radialement vers l'intérieur, par un flanc puis par un bourrelet destiné à entrer en contact avec une jante, l'ensemble délimitant une cavité torique intérieure. Plus précisément le sommet comprend, radialement de l'extérieur vers l'intérieur, une bande de roulement, destinée à entrer en contact avec le sol par l'intermédiaire d'une surface de roulement, et une armature de sommet destinée à assurer le renforcement du sommet du pneumatique. Une armature de carcasse relie les deux flancs entre eux et est ancrée, dans chaque bourrelet, à un élément circonférentiel de renforcement, le plus souvent de type tringle.

Les normes relatives au pneumatique, telles que, par exemple, celles de l'ETRTO, définissent des conditions d'usage nominales pour un pneumatique de dimension donnée, caractérisée par une largeur de section S, une hauteur de section H et un diamètre au seat D. Ainsi un pneumatique de dimension donnée est destiné à être monté sur une jante nominale, à être gonflé à une pression nominale P et à être soumis à une charge nominale Z. La charge appliquée sur le pneumatique est ainsi reprise par le pneumatique, grâce à sa rigidité pneumatique, résultant de la pression de gonflage, et grâce à sa rigidité structurelle intrinsèque.

Un pneumatique doit satisfaire un ensemble de performances, telles que, à titre d'exemples et de façon non exhaustive, le comportement, la résistance au roulement, l'adhérence, l'usure et le bruit, ce qui implique souvent des choix de conception antinomiques. Il est ainsi fréquent que des choix de conception pour l'amélioration d'une performance donnée entrainent la dégradation d'une autre performance. C'est le cas, par exemple, pour la recherche d'un compromis satisfaisant entre le comportement et la résistance au roulement.

Il est connu que le comportement d'un pneumatique, qui caractérise son aptitude à supporter les diverses sollicitations mécaniques auxquelles il est soumis en roulage, telles que les sollicitations en dérive et/ou les sollicitations transversales, dépend essentiellement de ses rigidités mécaniques respectivement de dérive Dz et transversale K_{YY}. Le comportement du pneumatique est d'autant meilleur que ces rigidités mécaniques sont élevées.

Dans l'état de la technique, pour améliorer le comportement du pneumatique, l'homme du métier a conçu, par exemple, des bourrelets de pneumatique à forte rigidité, ayant un volume important, résultant d'une épaisseur axiale et/ou d'une hauteur radiale élevée, et comprenant des matériaux élastomériques ayant un module d'élasticité et une hystérèse élevés, c'est-à-dire des matériaux à la fois rigides et dissipatifs. Une telle conception a, en contrepartie, augmenté la valeur de la résistance au roulement, donc dégradé la performance en résistance au roulement, et, corrélativement, augmenté la consommation de carburant.

Dans le document WO2017005713, une solution alternative au pneumatique classique a été proposée à travers un dispositif de type pneumatique comprenant deux structures de révolution respectivement radialement extérieure et radialement intérieure, une structure porteuse constituée par des éléments porteurs identiques, en extension en dehors de l'aire de contact avec le sol et en compression dans l'aire de contact, et deux flancs. Les éléments porteurs sont filaires et sont reliés respectivement à la face radialement intérieure de la structure de révolution radialement extérieure par un tissu radialement extérieur et à la face radialement extérieure de la structure de révolution radialement intérieure par un tissu radialement intérieur. En outre, la densité surfacique moyenne D des éléments porteurs par unité de surface de structure de révolution radialement extérieure, exprimée en 1/m², est au moins égale à (S/S_{E})^{∗}Z/(A^{∗}Fᵣ), où S est la surface, en m², de la face radialement intérieure de la structure de révolution radialement extérieure, S_{E} est la surface de liaison, en m², du tissu radialement extérieur avec la face radialement intérieure de la structure de révolution radialement extérieure, Z est la charge radiale nominale, en N, A est la surface de contact au sol, en m², et Fᵣ la force à rupture, en N, d'un élément porteur. Cette solution permet de supprimer les bourrelets dissipatifs d'un pneumatique classique, donc de réduire la résistance au roulement de façon drastique, tout en garantissant un bon comportement grâce à la reprise des sollicitations mécaniques de dérive et transversales par les éléments filaires de la structure porteuse. Toutefois, ce dispositif pneumatique présente en particulier l'inconvénient de nécessiter l'utilisation d'une jante non standard.

D'autres pneumatiques comprenant des structures de rigidification sont décrits dans GB2299554 et WO2019092343. Par ailleurs, des ensembles comprenant un pneumatique et une jante sont décrits dans FR2638398.

Le document WO2019092343 est un document de l'état de la technique selon l'Article 54(3) CBE.

Les inventeurs se sont donnés pour objectif de concevoir un pneumatique, apte à être monté sur une jante standard, avec un comportement amélioré par rapport à un pneumatique standard de l'état de la technique, et avec une résistance au roulement au plus égale à celle de ce pneumatique de référence.

Ce but a été atteint par un pneumatique pour véhicule, destiné à être monté sur une jante nominale et gonflé à une pression nominale P, ayant une largeur axiale S et une hauteur radiale H à l'état monté gonflé, et comprenant :
- un sommet ayant une surface de roulement radialement extérieure, destinée à entrer en contact avec un sol, et deux extrémités axiales, prolongées chacune radialement vers l'intérieur, par un flanc puis par un bourrelet destiné à entrer en contact avec la jante,
- le sommet, les flancs et les bourrelets délimitant une cavité torique intérieure,
- le pneumatique ayant un plan équatorial passant par le milieu de sa surface de roulement et perpendiculaire à un axe de rotation,
- le pneumatique comprenant une structure de rigidification, comprenant au moins un élément de rigidification s'étendant continûment dans la cavité torique intérieure, à partir d'une interface de sommet, reliée à une face radialement intérieure du sommet, jusqu'à une interface de bourrelet, reliée à une face axialement intérieure de bourrelet,
- la structure de rigidification étant répartie circonférentiellement sur toute la circonférence du pneumatique,
- l'interface de sommet d'élément de rigidification la plus axialement extérieure étant positionnée, par rapport au plan équatorial, à une distance axiale A au plus égale à 0.45 fois la largeur axiale S,
- et l'interface de bourrelet d'élément de rigidification la plus radialement extérieure étant positionnée, par rapport à un point le plus radialement intérieur de la face axialement intérieure de bourrelet, à une distance radiale B au plus égale à 0.5 fois la hauteur radiale H,
l'interface de bourrelet, reliée à une face axialement intérieure de bourrelet, est différente d'une semelle flexible en porte à faux prolongeant axialement vers l'intérieur un bourrelet et comprenant une extrémité libre, la semelle flexible comprenant une portion d'ancrage au bourrelet et une portion courante rigide s'étendant axialement vers l'intérieur à partir de la portion d'ancrage jusqu'à l'extrémité libre, l'élément de rigidification s'étendant continûment dans la cavité torique intérieure à partir de l'interface de sommet jusqu'à la semelle flexible.

Le principe de l'invention est d'implanter, dans un pneumatique classique, une structure de rigidification destinée à augmenter la rigidité globale du pneumatique, celle-ci ayant une composante structurelle, appelée rigidité structurelle et apportée par la structure de renforcement du pneumatique, et une composante pneumatique, appelée rigidité pneumatique et apportée par la pression du gaz de gonflage. La structure de rigidification apporte une contribution à la rigidité pneumatique.

Plus précisément, la structure de rigidification selon l'invention permet d'augmenter simultanément la rigidité radiale Kzz, la rigidité transversale ou axiale K_{YY}, et la rigidité de dérive Dz du pneumatique, par rapport au pneumatique de référence. La rigidité radiale Kzz, exprimée en daN/mm, est la force radiale Fz générée par le pneumatique lors de l'application d'un déplacement radial égal à 1 mm. La rigidité transversale ou axiale K_{YY}, exprimée en daN/mm, est la force axiale F_{Y} générée par le pneumatique lors de l'application d'un déplacement axial égal à 1 mm. Enfin la rigidité de dérive D_{Z}, exprimée en daN/°, est la force axiale Fy générée par le pneumatique lors d'un roulage avec un angle de 1° appliqué autour d'un axe radial ZZ'.

En augmentant la rigidité radiale Kzz, la structure de rigidification limite les déformations radiales du sommet, lors du roulage, et, en particulier, la contre-flèche, c'est-à-dire la déformation radiale, à l'opposé de l'aire de contact de la surface de roulement du pneumatique avec le sol. Ainsi, au cours du roulage du pneumatique, au tour de roue, la structure de rigidification permet de limiter l'amplitude des déformations cycliques du pneumatique, et en particulier de sa bande de roulement, et donc de limiter la dissipation d'énergie résultante, ce qui contribue à la diminution de la résistance au roulement. En outre, sous sollicitation radiale, l'aire de contact avec le sol n'est pas modifiée, c'est-à-dire conserve sensiblement la même surface, ce qui permet de conserver la même performance en adhérence que pour le pneumatique de référence.

En augmentant la rigidité transversale ou axiale K_{YY} et de rigidité de dérive Dz, la structure de rigidification va contribuer à l'amélioration du comportement, sous sollicitation transversale, par exemple lors d'un roulage en dérive. En outre, sous sollicitation transversale, l'aire de contact avec le sol garantit une répartition plus homogène des pressions de contact, ce qui permet d'augmenter la performance en adhérence transversale.

Par ailleurs la structure de rigidification participe au moins partiellement au port de la charge appliquée au pneumatique, de telle sorte que cette charge appliquée est reprise conjointement par le pneumatique, grâce à sa rigidité pneumatique et à sa rigidité structurelle intrinsèque, et par la structure de rigidification. Concernant le port de charge, lorsque le pneumatique est soumis à une charge radiale nominale Z, la portion de structure de rigidification, reliée à la portion de pneumatique en contact avec le sol, est soumise à un flambage en compression et la portion de structure de rigidification, reliée à la portion de pneumatique non en contact avec le sol, est au moins en partie en tension.

Par conséquent, la présence d'une structure de rigidification permet de diminuer la contribution de la structure de renforcement du pneumatique au port de la charge et donc autorise, le cas échéant, une diminution de sa rigidité structurelle intrinsèque, par exemple en réduisant le volume des bourrelets. Les bourrelets d'un pneumatique classique dissipant, de façon connue, une quantité d'énergie significative, du fait de leur volume et du caractère hystérétique de leur mélange élastomérique constitutif, réduire leur volume permettrait ainsi de réduire de façon significative la résistance au roulement.

Enfin, la structure de rigidification permet de modifier la réponse vibratoire du pneumatique à une sollicitation dynamique à une fréquence donnée. Les inventeurs ont montré par simulation numérique que le maximum de la courbe représentant la réponse vibratoire, en dB(A), en fonction de la fréquence, exprimée en Hz, ainsi que l'intégrale de ladite courbe, sont réduits pour un pneumatique selon l'invention par rapport à une pneumatique classique pris en référence : ce qui aurait a priori un impact positif vis-à-vis de la réduction du bruit extérieur.

Sur un plan structurel, selon l'invention, la structure de rigidification comprend au moins un élément de rigidification s'étendant continûment dans la cavité torique intérieure, à partir d'une interface de sommet, reliée à une face radialement intérieure du sommet, jusqu'à une interface de bourrelet, reliée à une face axialement intérieure de bourrelet. En d'autres termes, la structure de rigidification comprend au moins un élément de rigidification reliant le sommet du pneumatique à un bourrelet, ce qui crée une triangulation entre les portions respectivement radialement extérieure et intérieure du pneumatique. Les liaisons respectives de l'élément de rigidification avec le sommet et le bourrelet peuvent être soit directes, soit indirectes, par exemple par l'intermédiaire d'un moyen d'accrochage.

En outre la structure de rigidification est répartie circonférentiellement sur toute la circonférence du pneumatique. Plus précisément, la structure de rigidification soit s'étend circonférentiellement et continûment sur toute la circonférence du pneumatique, soit est répartie circonférentiellement et périodiquement sur toute la circonférence du pneumatique. Par conséquent la triangulation entre le sommet et les bourrelets du pneumatique est effective sur toute la circonférence du pneumatique.

Egalement selon l'invention, l'interface de sommet d'élément de rigidification la plus axialement extérieure est positionnée, par rapport au plan équatorial, à une distance axiale A au plus égale à 0.45 fois la largeur axiale S. Dans le cas où la structure de rigidification comprend plusieurs éléments de rigidification, la position axiale de l'interface de sommet la plus axialement extérieure conditionne les positions axiales respectives des autres interfaces de sommet qui sont, par conséquent, nécessairement plus proches du plan équatorial. Au-delà de cette valeur, tout élément de rigidification a une direction moyenne formant un angle trop faible par rapport à la direction radiale ZZ', ce qui apporte une contribution insuffisante aux rigidités respectivement transversale K_{YY} et de dérive Dz. Toutefois, même dans le cas d'un angle proche de 0°, les inventeurs ont pu constater une augmentation des rigidités respectivement radiale Kzz, transversale K_{YY} et de dérive D_{Z}.

Encore selon l'invention, l'interface de bourrelet d'élément de rigidification la plus radialement extérieure est positionnée, par rapport à un point le plus radialement intérieur de la face axialement intérieure de bourrelet, à une distance radiale B au plus égale à 0.5 fois la hauteur radiale H. Dans le cas où la structure de rigidification comprend plusieurs éléments de rigidification, la position radiale de l'interface de bourrelet la plus radialement extérieure conditionne les positions radiales respectives des autres interfaces de bourrelet qui sont, par conséquent, nécessairement plus proches du point le plus radialement intérieur de la face axialement intérieure de bourrelet appelé également pointe de bourrelet. Au-delà de cette valeur, tout élément de rigidification a une direction moyenne formant un angle trop important par rapport à la direction radiale ZZ', ce qui apporte une contribution insuffisante à la rigidité radiale Kzz, à la rigidité transversale K_{YY} et à la rigidité de dérive Dz.

Préférentiellement la structure de rigidification comprend plusieurs éléments de rigidification, non liés entre eux dans la cavité torique intérieure. Les éléments de rigidification sont non liés mécaniquement entre eux dans la cavité torique intérieure du pneumatique, de telle sorte qu'ils ont des comportements mécaniques indépendants. Par exemple, ils ne sont pas liés entre eux de façon à former un réseau ou un treillis. Plus particulièrement, les éléments de rigidification ne partagent pas la cavité intérieure torique en plusieurs cavités étanches et indépendantes les unes des autres. Le gaz de gonflage, le plus souvent de l'air, peut ainsi circuler librement entre les éléments de rigidification, dans toute la cavité intérieure torique, sans création de différentiels de pression de part et d'autre de ces éléments de rigidification.

Selon un mode de réalisation préféré, l'au moins un élément de rigidification de la structure de rigidification s'étend continûment dans la cavité torique intérieure sans couper le plan équatorial. En d'autres termes un élément de rigidification s'étend d'un même coté du plan équatorial et ne le coupe pas. Par conséquent, deux éléments de rigidification s'étendant de part et d'autres du plan équatorial ne se coupent jamais. La présence d'éléments de rigidification de part et d'autre du plan équatorial permet d'avoir une rigidification des deux moitiés de pneumatiques situées de part et d'autre du plan équatorial.

Selon une variante préférée du mode de réalisation préféré précédent, la structure de rigidification est symétrique par rapport au plan équatorial. En d'autres termes, tout élément de rigidification s'étendant d'un côté du plan équatorial a son symétrique s'étendant du côté opposé. Ce mode de réalisation permet de répartir de manière équilibrée les efforts passant par la structure de rigidification entre les deux moitiés du pneumatique, et donc d'avoir un comportement symétrique du pneumatique en roulage. Par ailleurs, la fabrication d'une structure de rigidification symétrique est plus simple.

Préférentiellement l'interface de sommet d'élément de rigidification la plus axialement extérieure est positionnée, par rapport au plan équatorial, à une distance axiale A au plus égale à 0.15 fois et au moins égale à 0.05 fois la largeur axiale S. Les inventeurs ont en effet montré qu'une distance axiale A sensiblement égale à 0.10 fois la largeur axiale S était un mode de réalisation avantageux.

Encore préférentiellement l'interface de bourrelet d'élément de rigidification la plus radialement extérieure est positionnée, par rapport à un point le plus radialement intérieur de la face axialement intérieure de bourrelet, à une distance radiale B au plus égale à 0.10 fois, de préférence au plus égale à 0.05 fois la hauteur radiale H. Les inventeurs ont en effet montré qu'une distance radiale B quasi nulle était un mode de réalisation avantageux.

La combinaison de ces deux caractéristiques de positionnement préférentiel respectivement des interfaces de sommet et de bourrelet permet de garantir une inclinaison optimale des éléments de rigidification, par rapport à une direction radiale, c'est-à-dire garantissant un bon compromis entre la rigidité radiale Kzz, à la rigidité transversale K_{YY} et à la rigidité de dérive Dz.

Le plus souvent la structure de rigidification est constituée par des éléments de rigidification identiques entre eux, ce qui garantit une homogénéité de fonctionnement et permet une fabrication simplifiée.

Concernant les matériaux constitutifs de la structure de rigidification, tout élément de rigidification comprend un matériau polymérique, tel qu'un polyamide aliphatique, un polyamide aromatique ou un polyester, ou un matériau métallique, tel que l'acier, ou un matériau de type verre ou carbone ou toute combinaison des précédents matériaux. Les matériaux polymériques, en particulier les matériaux élastomériques, et les matériaux métalliques, tels que l'acier, sont couramment utilisés dans le domaine du pneumatique. Le verre et le carbone sont des matériaux alternatifs envisageables pour une utilisation en pneumatique. Dans une première variante de matériau, tout élément de rigidification comprend avantageusement du polyéthylène téréphtalate (PET). Le PET est couramment utilisé dans le domaine du pneumatique, en raison d'un bon compromis entre ses propriétés mécaniques, telles que sa résistance à la rupture en traction, et son coût. Dans une seconde variante de matériau, tout élément de rigidification comprend également avantageusement un polyamide aliphatique, tel que du nylon. Le nylon est également couramment utilisé dans le domaine du pneumatique pour les mêmes raisons que le PET.

Chaque élément de rigidification peut être caractérisé géométriquement, d'une part par sa longueur L, distance séparant ses deux extrémités destinées à devenir respectivement ses interfaces de sommet et de bourrelet, et d'autre part par sa section moyenne Sₘ. La section moyenne Sₘ est la moyenne des sections obtenues par la coupe de l'élément de rigidification par toutes les surfaces perpendiculaires à sa ligne moyenne. Dans le cas le plus fréquent d'une section constante, la section moyenne Sₘ est la section constante de l'élément de rigidification. La section moyenne Sₘ comprend une plus grande dimension caractéristique Dₘₐₓ et une plus petite dimension caractéristique Dₘᵢₙ, dont le rapport R= Dₘₐₓ/Dₘᵢₙ est appelé rapport de forme. A titre d'exemples, un élément de rigidification ayant une section moyenne Sₘ circulaire, ayant un diamètre égal à d, a un rapport de forme R=1, un élément de rigidification ayant une section moyenne Sₘ rectangulaire, ayant une longueur L et une largeur l, a un rapport de forme R=L/l, et un élément de rigidification ayant une section moyenne Sₘ elliptique, ayant un grand axe D et un petit axe d, a un rapport de forme R=D/d.

Selon un premier mode de réalisation des éléments de rigidification, tout élément de rigidification est un élément bidimensionnel. Un élément de rigidification est considéré comme bidimensionnel, quand le rapport de forme R de sa section moyenne Sₘ est au moins égal à 3, c'est à-dire quand la plus grande dimension caractéristique Dₘₐₓ de sa section moyenne Sₘ est au moins égale à 3 fois la plus petite dimension caractéristique Dₘᵢₙ de sa section moyenne Sₘ. Un élément de rigidification bidimensionnel a un comportement mécanique de type membranaire, c'est-à-dire qu'il ne peut être soumis qu'à des efforts d'extension ou de compression perpendiculairement à sa section moyenne Sₘ. Selon une première variante, un élément de rigidification, avec un rapport de forme R au moins égal à 3 et au plus égal à 50, est dit bidimensionnel de type bandelette. Selon une deuxième variante, un élément de rigidification, avec un rapport de forme R au moins égal à 50, est dit bidimensionnel de type film.

Selon une variante préférée du premier mode de réalisation avec éléments de rigidification bidimensionnels, tout élément de rigidification bidimensionnel est constitué par un tissu de renforcement comprenant des éléments de renforcement enrobés dans un mélange élastomérique. Une structure de rigidification constituée par des éléments de rigidification bidimensionnels, en particulier de type film, apporte une homogénéité de structure sur toute la circonférence du pneumatique et est avantageuse, du point de vue de la fabrication, en permettant la pose d'un produit unique contribuant à une bonne productivité.

Selon un deuxième mode de réalisation des éléments de rigidification, tout élément de rigidification est un élément unidimensionnel de type fil ou câble. Un élément de rigidification est considéré comme unidimensionnel, quand le rapport de forme R de sa section moyenne Sₘ est au plus égal à 3, c'est à-dire quand la plus grande dimension caractéristique Dₘₐₓ de sa section moyenne Sₘ est au plus égale à 3 fois la plus petite dimension caractéristique Dₘᵢₙ de sa section moyenne Sₘ. Un élément de rigidification unidimensionnel a un comportement mécanique de type filaire, c'est-à-dire qu'il ne peut être soumis qu'à des efforts d'extension ou de compression selon sa ligne moyenne. C'est la raison pour laquelle un élément de rigidification unidimensionnel est usuellement appelé élément de rigidification filaire. Parmi les composants couramment utilisés dans le domaine du pneumatique, les renforts textiles, constitués par un assemblage de filés textiles, ou les câbles métalliques, constitués par un assemblage de fils métalliques, peuvent être considérés comme des éléments de rigidification unidimensionnels, car leur section moyenne Sₘ étant sensiblement circulaire, le rapport de forme R est égal à 1, donc inférieur à 3. Il est à noter que les éléments de rigidification unidimensionnels ne sont pas nécessairement positionnés dans un plan méridien ou radial, contenant l'axe de rotation du pneumatique, mais peuvent présenter, par rapport à ce dernier, une inclinaison susceptible d'impacter la rigidité circonférentielle Kxx du pneumatique.

L'invention est illustrée par les figures ci-dessous référencées, non représentées à l'échelle et décrites ci-après :
- Figure 1A: Coupe méridienne d'un pneumatique selon un premier mode de réalisation de l'invention.
- Figure 1B: Coupe méridienne d'un pneumatique selon un deuxième mode de réalisation de l'invention.
- Figure 1C : Coupe méridienne d'un pneumatique selon un troisième mode de réalisation de l'invention.
- Figure 2 : Vue en perspective d'un premier exemple de pneumatique selon l'invention, avec des éléments de rigidification bidimensionnels de type films.
- Figure 3 : Vue en perspective d'un deuxième exemple de pneumatique selon l'invention, avec des éléments de rigidification unidimensionnels de type câbles.
- Figure 4 : Rigidités radiales Kzz comparées entre un pneumatique selon l'invention et un pneumatique de référence de l'état de la technique.
- Figure 5 : Rigidités transversales ou axiales K_{YY} comparées entre un pneumatique selon l'invention et un pneumatique de référence de l'état de la technique.

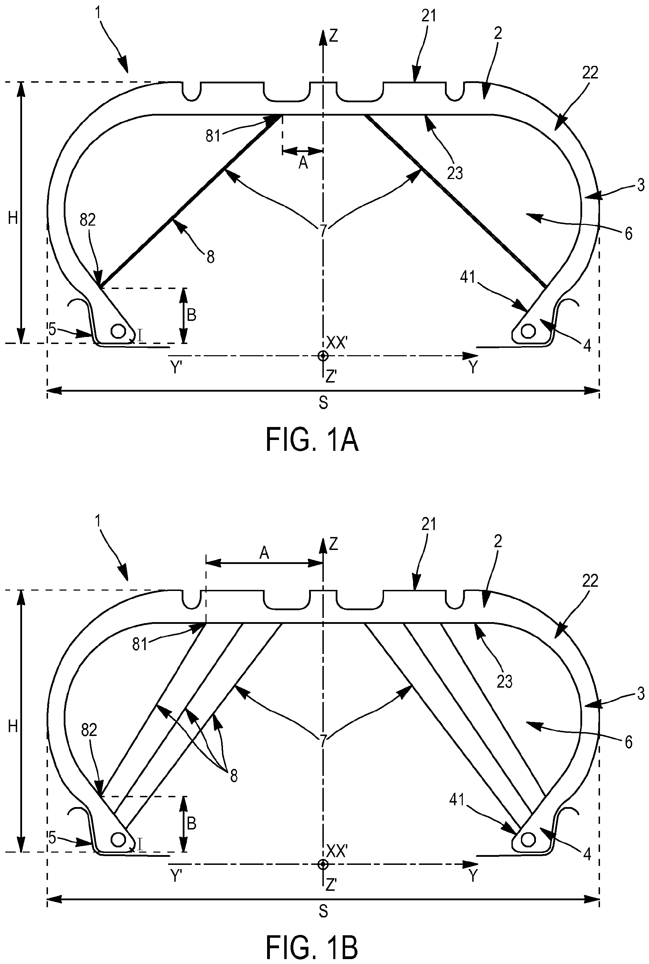

La figure 1A représente une coupe méridienne d'un pneumatique selon un premier mode de réalisation de l'invention. Le pneumatique 1 pour véhicule de tourisme, représenté, est destiné à être monté sur une jante nominale 5 et gonflé à une pression nominale P, et a une largeur axiale S et une hauteur radiale H à l'état monté gonflé. Le pneumatique 1 comprend un sommet 2 ayant une surface de roulement 21 radialement extérieure, destinée à entrer en contact avec un sol, et deux extrémités axiales 22, prolongées chacune radialement vers l'intérieur, par un flanc 3 puis par un bourrelet 4 destiné à entrer en contact avec la jante 5. Le sommet 2, les flancs 3 et les bourrelets 4 délimitent une cavité torique intérieure 6. Le pneumatique 1 a un plan équatorial XZ passant par le milieu de sa surface de roulement 21 et perpendiculaire à un axe de rotation YY'. Selon ce premier mode de réalisation de l'invention, le pneumatique 1 comprend une structure de rigidification 7, comprenant deux éléments de rigidification 8 s'étendant continûment dans la cavité torique intérieure 6, à partir d'une interface de sommet 81, reliée à une face radialement intérieure du sommet 23, jusqu'à une interface de bourrelet 82, reliée à une face axialement intérieure de bourrelet 41. La structure de rigidification 7 est répartie circonférentiellement sur toute la circonférence du pneumatique. Les deux éléments de rigidification 8, constitutifs de la structure de rigidification 7, sont non liés entre eux à l'intérieur de la cavité torique intérieure 6, s'étendent continûment dans la cavité torique intérieure 6 sans couper le plan équatorial XZ et sont symétriques par rapport au plan équatorial XZ. L'interface de sommet 81 d'élément de rigidification 8, nécessairement la plus axialement extérieure dans le cas présent, compte tenu de la présence d'un seul élément de rigidification 8 de part et d'autre du plan équatorial XZ, est positionnée, par rapport au plan équatorial XZ, à une distance axiale A au plus égale à 0.45 fois la largeur axiale S. L'interface de bourrelet 82 d'élément de rigidification 8, nécessairement la plus radialement extérieure dans le cas présent, est positionnée, par rapport à un point I le plus radialement intérieur de la face axialement intérieure de bourrelet 41, à une distance radiale B au plus égale à 0.5 fois la hauteur radiale H. Il est à noter que, dans le cas où chaque élément de rigidification 8, tel représenté sur la figure 1A, est de type unidimensionnel ou filaire, celui-ci n'est pas nécessairement contenu dans un plan méridien YZ, mais peut être éventuellement incliné par rapport au plan méridien YZ.

La figure 1B représente une coupe méridienne d'un pneumatique selon un deuxième mode de réalisation de l'invention, dans lequel la structure de rigidification 7 comprend, de part et d'autre du plan équatorial XZ, trois éléments de rigidification 8 tels que précédemment décrits. Les caractéristiques de positionnement maximales respectivement axialement, avec la distance axiale A, et radialement, avec la distance radiale B, concernent l'élément de rigidification le plus axialement extérieur, de part et d'autre du plan équatorial XZ.

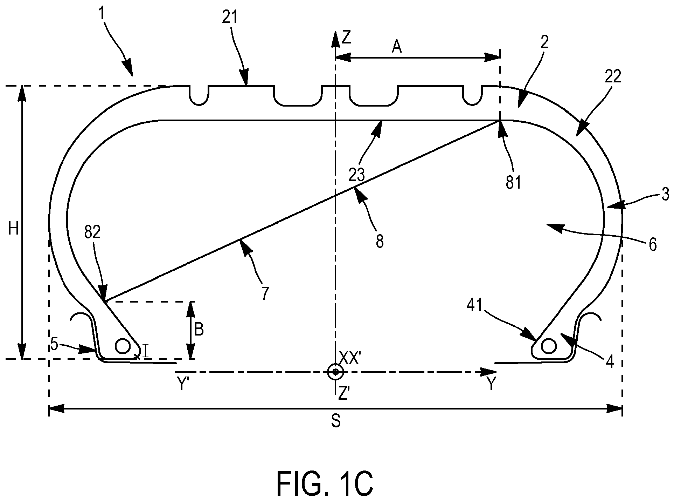

La figure 1C représente une coupe méridienne d'un pneumatique selon un troisième mode de réalisation de l'invention, dans lequel la structure de rigidification 7 comprend un seul élément de rigidification 8 traversant la cavité torique 6, en coupant le plan équatorial 7. Les caractéristiques de positionnement maximales respectivement axialement, avec la distance axiale A, et radialement, avec la distance radiale B, sont satisfaites pour cet unique élément de rigidification 8.

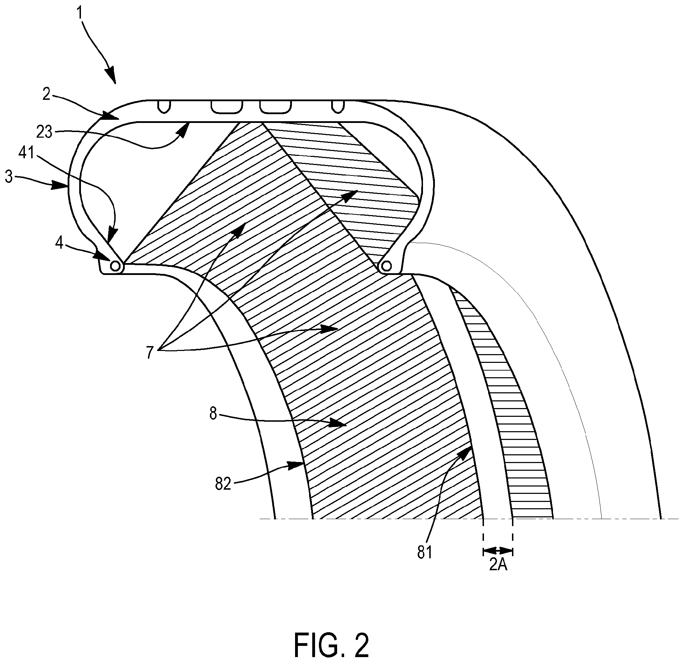

La figure 2 représente une vue en perspective partielle d'un premier exemple de pneumatique selon l'invention, comprenant une structure de rigidification 7 avec deux éléments de rigidification 8 bidimensionnels de type films, s'étendant continûment dans la cavité torique intérieure, à partir d'une interface de sommet 81, reliée à une face radialement intérieure du sommet 23, jusqu'à une interface de bourrelet 82, reliée à une face axialement intérieure de bourrelet 41. Ces deux éléments de rigidification 8 bidimensionnels de type films sont symétriques par rapport au plan équatorial du pneumatique. Comme l'interface de sommet 81 de chaque élément de rigidification 8 est positionnée à une distance axiale A par rapport au plan équatorial du pneumatique, la distance axiale 2A séparent les deux interfaces de sommet 81 respectives. Chaque élément de rigidification 8, axisymétrique par rapport à l'axe de rotation du pneumatique, s'étend circonférentiellement de façon homogène sur toute la circonférence du pneumatique.

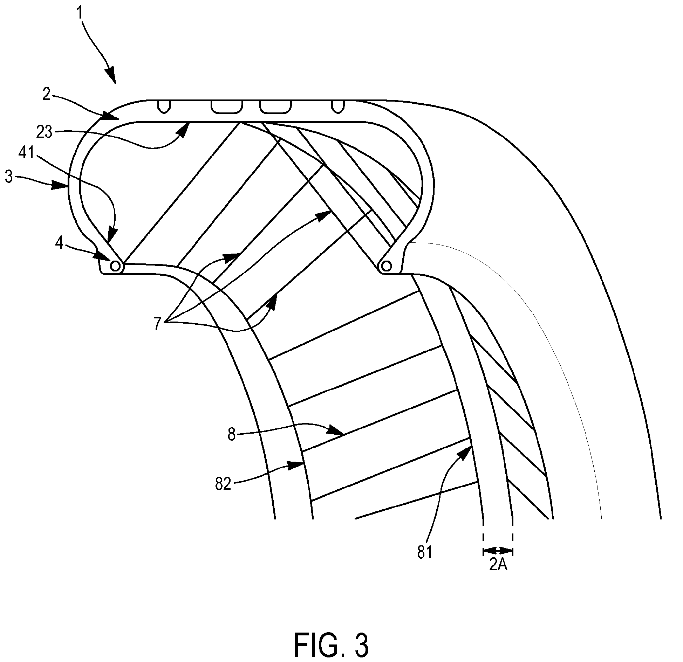

La figure 3 représente une vue en perspective partielle d'un deuxième exemple de pneumatique selon l'invention, comprenant une structure de rigidification 7 avec des éléments de rigidification 8 unidimensionnels de type câbles, s'étendant continûment dans la cavité torique intérieure, à partir d'une interface de sommet 81, reliée à une face radialement intérieure du sommet 23, jusqu'à une interface de bourrelet 82, reliée à une face axialement intérieure de bourrelet 41. Ces éléments de rigidification 8 unidimensionnels de type câbles sont répartis en deux groupes symétriques par rapport au plan équatorial du pneumatique. Les éléments de rigidification de chaque groupe sont répartis circonférentiellement de façon homogène sur toute la circonférence du pneumatique et sont deux à deux espacés par un pas constant. Comme pour le mode de réalisation de la figure 2, l'interface de sommet 81 de chaque élément de rigidification 8 étant positionnée à une distance axiale A par rapport au plan équatorial du pneumatique, la distance axiale 2A séparent les deux interfaces de sommet 81 respectives de deux éléments de rigidification 8 symétriques.

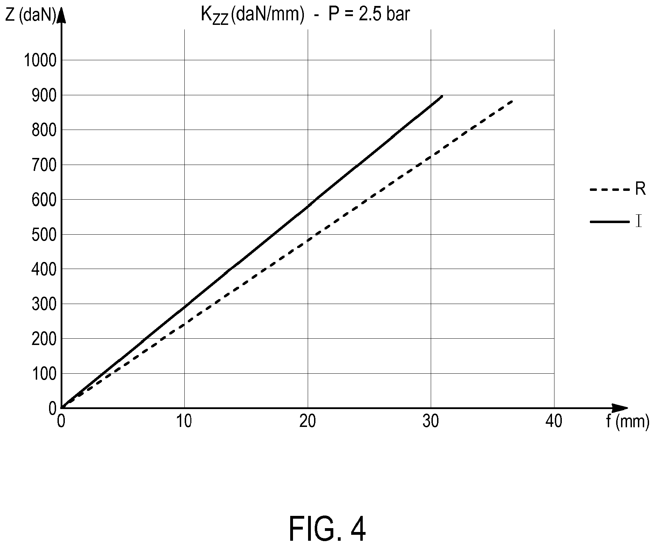

La figure 4 est un graphe présentant les rigidités radiales Kzz comparées entre un pneumatique selon l'invention et un pneumatique de référence de l'état de la technique. Pour une pression de gonflage P et une flèche radiale f données, l'effort radial Z généré par le pneumatique selon l'invention est plus élevé que celui généré par le pneumatique de référence. La pente de la courbe d'effort radial Z en fonction de la flèche radiale f du pneumatique, c'est-à-dire du déplacement radial du sommet du pneumatique, représente la rigidité radiale Kzz du pneumatique. Par conséquent, la rigidité radiale Kzz du pneumatique selon l'invention est plus élevée que celle du pneumatique de référence.

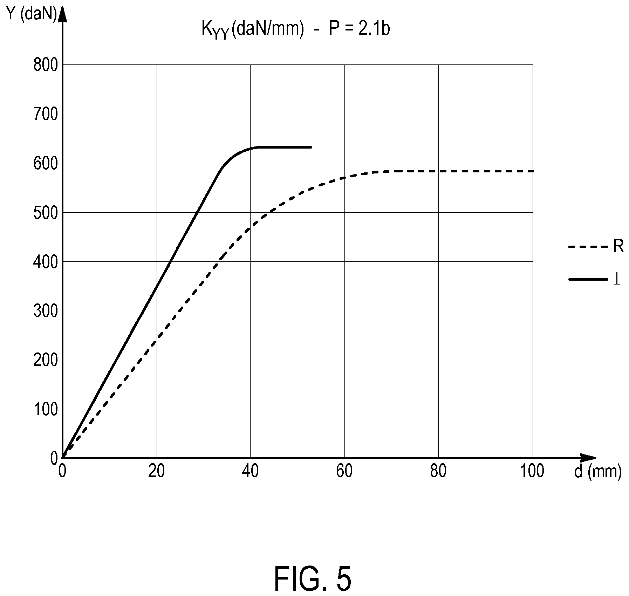

La figure 5 est un graphe présentant les rigidités transversales ou axiales K_{YY} comparées entre un pneumatique selon l'invention et un pneumatique de référence de l'état de la technique. Pour une pression de gonflage P, une flèche radiale f et un déport transversal d donnés, l'effort transversal Y généré par le pneumatique selon l'invention est plus élevé que celui généré par le pneumatique de référence. La pente de la portion sensiblement linéaire de la courbe d'effort transversal Y en fonction du déport transversal d du pneumatique, c'est-à-dire de son déplacement transversal, représente la rigidité transversale K_{YY} du pneumatique. La portion sensiblement linéaire de la courbe d'effort transversal Y correspond, dans le cas représenté, à un déport transversal au plus égal à environ 30 mm. Par conséquent, la rigidité transversale K_{YY} du pneumatique selon l'invention est plus élevée que celle du pneumatique de référence. Au-delà de 30 mm de déport transversal, l'effort transversal Y atteint un palier en raison du glissement de la surface de roulement du pneumatique sur le sol. Dans le cas de l'invention, cette stabilisation de l'effort transversal Y s'opère à un niveau plus élevé, en raison d'une rigidité transversale K_{YY} plus élevée permettant de conserver une répartition plus homogène de la pression dans l'aire de contact, sous effort transversal Y.

L'invention a été plus particulièrement étudiée pour un pneumatique de tourisme de dimension 205/55R16. Un pneumatique de référence R a ainsi été comparé à un premier exemple de pneumatique I1 selon l'invention, avec des éléments de rigidification bidimensionnels de type films, présenté sur la figure 2, et à un deuxième exemple de pneumatique I2 selon l'invention, avec éléments de rigidification unidimensionnels de type câbles, présenté sur la figure 3.

Les pneumatiques respectivement de référence R, selon l'invention I1 et selon l'invention I2, sont destinés à être montés sur une jante nominale 6.5J16 et à être gonflés à une pression nominale P égale à 2.5 bars. Leurs largeurs axiales S et leurs hauteurs radiales H, à l'état monté et gonflé, sont respectivement égales à 209 mm et 104 mm.

Le premier exemple I1 est caractérisé par une structure de rigidification, telle que représentée sur la figure 2, avec deux éléments de rigidification bidimensionnels de type films, symétriques par rapport au plan équatorial du pneumatique. Chaque élément de rigidification bidimensionnel est constitué par une juxtaposition de bandelettes, chaque bandelette ayant une largeur de 6 cm avec une tolérance de 1 cm. Le matériau des bandelettes est un tissu constitué de renforts textiles en polyester enrobés par un mélange élastomérique, lesdits renforts textiles ayant une section unitaire égale à 0.42 mm² et étant répartis selon un pas constant égal à 0.96 mm. Les renforts textiles sont positionnés radialement, c'est-à-dire dans des plans méridiens du pneumatique. Pour constituer l'interface de sommet, l'extrémité radialement extérieure de chaque bandelette est solidarisée à la face radialement intérieure du sommet par vulcanisation à chaud. Pour constituer l'interface de bourrelet, l'extrémité radialement intérieure de chaque bandelette est maintenue par serrage entre le bourrelet et la jante. En outre, la distance axiale A est comprise entre 0.05 fois et 0.15 fois la largeur axiale S du pneumatique, et la distance radiale B est au plus égale à 0.05 fois la hauteur radiale H du pneumatique.

Le deuxième exemple I2 est caractérisé par une structure de rigidification, telle que représentée sur la figure 3, avec des éléments de rigidification unidimensionnels de type câbles répartis en deux groupes symétriques par rapport au plan équatorial du pneumatique. Chaque élément de rigidification unidimensionnel est un renfort textile, constitué d'une combinaison d'un polyamide aromatique de type aramide, et d'un polyamide aliphatique de type nylon, et ayant une section unitaire égale à 1 mm². Les éléments de rigidification de chaque groupe sont répartis circonférentiellement de façon homogène sur toute la circonférence du pneumatique et sont deux à deux espacés par un pas constant égal à 30 mm et sont inclinés, par rapport à un plan méridien, d'un angle sensiblement égal à 10°. Les interfaces respectivement de sommet et de bourrelet de chaque élément de rigidification unidimensionnel sont réalisées par liaison des extrémités correspondantes à des accrochages positionnés respectivement sur la face axialement intérieure du sommet et la face axialement intérieure du bourrelet avant la cuisson du pneumatique.

Le tableau 1 ci-dessous résume les écarts de performances obtenues respectivement entre le premier exemple de pneumatique I1 et le pneumatique de référence R, et le deuxième exemple de pneumatique I2 et le pneumatique de référence :

**Tableau 1**

| Caractéristiques de performance | Ecarts de performance du pneumatique I1 par rapport au pneumatique R | Ecarts de performance du pneumatique I2 par rapport au pneumatique R |
|---|---|---|
| Rigidité radiale K_{ZZ} | +20% | 0% |
| Rigidité transversale K_{YY} | +50% | +30% |
| Rigidité de dérive D_{Z} | +5% (Z=480daN) | Non déterminé |
| | +20% (Z=800daN) | |
| Résistance au roulement (calculée) | -0.2kg/t | Non déterminé |

Les résultats du tableau 1 montrent un compromis de performances amélioré entre la résistance au roulement et le comportement pour l'invention. Il est à noter que ce compromis est modulable : le premier exemple I1, caractérisé par une importante densité de renforts textiles, offre un décalage de performances plus important que le deuxième exemple I2 qui est lui-même décalé par rapport au pneumatique de référence R.

## Revendications

1. - Pneumatique (1) pour véhicule, destiné à être monté sur une jante nominale (5) et gonflé à une pression nominale P, ayant une largeur axiale S et une hauteur radiale H à l'état monté gonflé, et comprenant :
- un sommet (2) ayant une surface de roulement (21) radialement extérieure, destinée à entrer en contact avec un sol, et deux extrémités axiales (22), prolongées chacune radialement vers l'intérieur, par un flanc (3) puis par un bourrelet (4) destiné à entrer en contact avec la jante (5),
- le sommet (2), les flancs (3) et les bourrelets (4) délimitant une cavité torique intérieure (6),
- le pneumatique (1) ayant un plan équatorial (XZ) passant par le milieu de sa surface de roulement (21) et perpendiculaire à un axe de rotation (YY'),
**caractérisé en ce que** le pneumatique (1) comprend une structure de rigidification (7), comprenant au moins un élément de rigidification (8) s'étendant continûment dans la cavité torique intérieure (6), à partir d'une interface de sommet (81), reliée à une face radialement intérieure du sommet (23), jusqu'à une interface de bourrelet (82), reliée à une face axialement intérieure de bourrelet (41), **en ce que** la structure de rigidification (7) est répartie circonférentiellement sur toute la circonférence du pneumatique, **en ce que** l'interface de sommet (81) d'élément de rigidification (8) la plus axialement extérieure est positionnée, par rapport au plan équatorial (XZ), à une distance axiale A au plus égale à 0.45 fois la largeur axiale S **et en ce que** l'interface de bourrelet (82) d'élément de rigidification (8) la plus radialement extérieure est positionnée, par rapport à un point (I) le plus radialement intérieur de la face axialement intérieure de bourrelet (41), à une distance radiale B au plus égale à 0.5 fois la hauteur radiale H,
l'interface de bourrelet (82), reliée à une face axialement intérieure de bourrelet (41) , est différente d'une semelle flexible en porte à faux prolongeant axialement vers l'intérieur un bourrelet et comprenant une extrémité libre, la semelle flexible comprenant une portion d'ancrage au bourrelet et une portion courante rigide s'étendant axialement vers l'intérieur à partir de la portion d'ancrage jusqu'à l'extrémité libre, l'élément de rigidification s'étendant continûment dans la cavité torique intérieure à partir de l'interface de sommet jusqu'à la semelle flexible.

2. - Pneumatique (1) selon la revendication 1, **dans lequel** la structure de rigidification (7) comprend plusieurs éléments de rigidification (8), non liés entre eux dans la cavité torique intérieure (6).

3. - Pneumatique (1) selon l'une des revendications 1 ou 2, **dans lequel** l'au moins un élément de rigidification (8) de la structure de rigidification (7) s'étend continûment dans la cavité torique intérieure (6) sans couper le plan équatorial (XZ).

4. - Pneumatique (1) selon la revendication 3, **dans lequel** la structure de rigidification (7) est symétrique par rapport au plan équatorial (XZ).

5. - Pneumatique (1) selon l'une quelconque des revendications 1 à 4, **dans lequel** l'interface de sommet (81) d'élément de rigidification (8) la plus axialement extérieure est positionnée, par rapport au plan équatorial (XZ), à une distance axiale A au plus égale à 0.15 fois et au moins égale à 0.05 fois la largeur axiale S.

6. - Pneumatique (1) selon l'une quelconque des revendications 1 à 5, **dans lequel** l'interface de bourrelet (82) d'élément de rigidification (8) la plus radialement extérieure est positionnée, par rapport à un point (I) le plus radialement intérieur de la face axialement intérieure de bourrelet (41), à une distance radiale B au plus égale à 0.10 fois, de préférence au plus égale à 0.05 fois la hauteur radiale H.

7. - Pneumatique (1) selon l'une quelconque des revendications 2 à 6, **dans lequel** la structure de rigidification (7) est constituée par des éléments de rigidification (8) identiques entre eux.

8. - Pneumatique (1) selon l'une quelconque des revendications 1 à 7, **dans lequel** tout élément de rigidification (8) comprend un matériau polymérique, tel qu'un polyamide aliphatique, un polyamide aromatique ou un polyester, ou un matériau métallique, tel que l'acier, ou un matériau de type verre ou carbone ou toute combinaison des précédents matériaux.

9. - Pneumatique (1) selon l'une quelconque des revendications 1 à 8, **dans lequel** tout élément de rigidification (8) est un élément bidimensionnel.

10. - Pneumatique (1) selon la revendication 9, **dans lequel** tout élément de rigidification (8) bidimensionnel est constitué par un tissu de renforcement comprenant des éléments de renforcement enrobés dans un mélange élastomérique.

11. - Pneumatique (1) selon l'une quelconque des revendications 1 à 8, **dans lequel** tout élément de rigidification (8) est un élément unidimensionnel de type fil ou câble.

## Patentansprüche

1. Luftreifen (1) für ein Fahrzeug, der dazu bestimmt ist, auf einer Nennfelge (5) montiert zu werden und auf einen Nenndruck P aufgepumpt zu werden, im aufgepumpten montierten Zustand eine axiale Breite S und eine radiale Höhe H hat und umfasst:
- einen Scheitel (2), der eine radial äußere Lauffläche (21) hat, die dazu bestimmt ist, mit einem Boden in Kontakt zu gelangen, und zwei axiale Enden (22), die jeweils radial nach innen verlängert sind durch eine Seitenwand (3), dann durch eine Wulst (4), die dazu bestimmt ist, mit der Felge (5) in Kontakt zu gelangen,
- wobei der Scheitel (2), die Seitenwände (3) und die Wülste (4) einen inneren torischen Hohlraum (6) begrenzen,
- wobei der Luftreifen (1) eine Äquatorialebene (XZ) hat, die durch die Mitte seiner Lauffläche (21) und senkrecht zu einer Rotationsachse (YY') verläuft,
**dadurch gekennzeichnet, dass** der Luftreifen (1) eine Verstärkungsstruktur (7) umfasst, die mindestens ein Verstärkungselement (8) umfasst, das sich durchgehend in dem inneren torischen Hohlraum (6) von einer Scheitelschnittstelle (81) aus, die mit einer radial inneren Seite des Scheitels (23) verbunden ist, bis zu einer Wulstschnittstelle (82), die mit einer axial inneren Wulstseite (41) verbunden ist, erstreckt, dass die Verstärkungsstruktur (7) umfangsmäßig über den gesamten Umfang des Luftreifens verteilt ist, dass die axial äußerste Scheitelschnittstelle (81) eines Verstärkungselements (8) in Bezug auf die Äquatorialebene (XZ) in einem axialen Abstand A von höchstens dem 0,45-Fachen der axialen Breite S angeordnet ist und dass die radial äußerste Wulstschnittstelle (82) eines Verstärkungselements (8) in Bezug auf einen radial innersten Punkt (I) der axial inneren Wulstseite (41) in einem radialen Abstand B von höchstens dem 0,5-Fachen der radialen Höhe H angeordnet ist, die Wulstschnittstelle (82), die mit einer axial inneren Wulstseite (41) verbunden ist, verschieden von einer vorspringenden flexiblen Sohle ist, die axial nach innen hin eine Wulst verlängert und ein freies Ende umfasst, wobei die flexible Sohle einen Verankerungsabschnitt an der Wulst umfasst und ein starren laufenden Abschnitt, der sich axial nach innen hin von dem Verankerungsabschnitt aus bis zu dem freien Ende erstreckt, wobei sich das Verstärkungselement in dem inneren torischen Hohlraum von der Scheitelschnittstelle aus bis zu der flexiblen Sohle durchgehend erstreckt.

2. Luftreifen (1) nach Anspruch 1, bei dem die Verstärkungsstruktur (7) mehrere Verstärkungselemente (8) umfasst, die in dem inneren torischen Hohlraum (6) nicht untereinander verbunden sind.

3. Luftreifen (1) nach einem der Ansprüche 1 oder 2, bei dem sich das mindestens eine Verstärkungselement (8) der Verstärkungsstruktur (7) in dem inneren torischen Hohlraum (6) durchgehend erstreckt, ohne die Äquatorialebene (XZ) zu schneiden.

4. Luftreifen (1) nach Anspruch 3, bei dem die Verstärkungsstruktur (7) in Bezug auf die Äquatorialebene (XZ) symmetrisch ist.

5. Luftreifen (1) nach einem der Ansprüche 1 bis 4, bei dem die axial äußerste Scheitelschnittstelle (81) eines Verstärkungselements (8) in Bezug auf die Äquatorialebene (XZ) in einem axialen Abstand A von höchstens dem 0,15-Fachen und mindestens dem 0,05-Fachen der axialen Breite S angeordnet ist.

6. Luftreifen (1) nach einem der Ansprüche 1 bis 5, bei dem die radial äußerste Wulstschnittstelle (82) eines Verstärkungselements (8) in Bezug auf einen radial innersten Punkt (I) der axial inneren Wulstseite (41) in einem radialen Abstand B von höchstens dem 0,10-Fachen, bevorzugt höchstens dem 0,05-Fachen, der radialen Höhe H angeordnet ist.

7. Luftreifen (1) nach einem der Ansprüche 2 bis 6, bei dem die Verstärkungsstruktur (7) aus untereinander identischen Verstärkungselementen (8) besteht.

8. Luftreifen (1) nach einem der Ansprüche 1 bis 7, bei dem jedes Verstärkungselement (8) ein Polymermaterial wie etwa ein aliphatisches Polyamid, ein aromatisches Polyamid oder einen Polyester oder ein metallisches Material wie etwa Stahl oder ein glas- oder karbonartiges Material oder eine Kombination der vorhergehenden Materialien umfasst.

9. Luftreifen (1) nach einem der Ansprüche 1 bis 8, bei dem jedes Verstärkungselement (8) ein zweidimensionales Element ist.

10. Luftreifen (1) nach Anspruch 9, bei dem jedes zweidimensionale Verstärkungselement (8) aus einem Aussteifungsgewebe besteht, das Aussteifungselemente umfasst, die in eine Elastomermischung eingebettet sind.

11. Luftreifen (1) nach einem der Ansprüche 1 bis 8, bei dem jedes Verstärkungselement (8) ein eindimensionales faden- oder seilartiges Element ist.

## Claims

1. - Tyre (1), intended to be mounted on a nominal rim (5) and inflated to a nominal pressure P, having an axial width S and a radial height H in the mounted and inflated state, and comprising:
- a crown (2) having a radially outer tread surface (21), intended to come into contact with the ground, and two axial ends (22), each extended radially towards the inside by a sidewall (3) and then by a bead (4) intended to come into contact with the rim (5),
- the crown (2), the sidewalls (3) and the beads (4) delimiting a toroidal interior cavity (6),
- the tyre (1) having an equatorial plane (XZ) passing through the middle of its tread surface (21) and perpendicular to an axis of rotation (YY'),
**characterized in that** the tyre (1) comprises a stiffening structure (7), comprising at least one stiffening element (8) extending continuously in the toroidal interior cavity (6), from a crown interface (81) connected to a radially inner face of the crown (23), to a bead interface (82) connected to an axially inner face of the bead (41), **in that** the stiffening structure (7) is distributed circumferentially over the entire circumference of the tyre, **in that** the axially outermost stiffening element (8) crown interface (81) is positioned, with respect to the equatorial plane (XZ), at an axial distance A at most equal to 0.45 times the axial width S, **and in that** the radially outermost stiffening element (8) bead interface (82) is positioned, with respect to a radially innermost point (I) of the axially inner face of the bead (41), at a radial distance B at most equal to 0.5 times the radial height H,
the bead interface (82), connected to an axially inner face of the bead (41), is different from an overhanging flexible base extending a bead axially towards the inside and comprising a free end, the flexible base comprising an anchoring portion anchoring it to the bead and a rigid standard portion extending axially towards the inside from the anchoring portion to the free end, the stiffening element extending continuously in the toroidal interior cavity from the crown interface to the flexible base.

2. - Tyre (1) according to Claim 1, **in which** the stiffening structure (7) comprises several stiffening elements (8) not joined to one another in the toroidal interior cavity (6).

3. - Tyre (1) according to one of Claims 1 and 2, **in which** the at least one stiffening element (8) of the stiffening structure (7) extends continuously in the toroidal interior cavity (6) without intersecting the equatorial plane (XZ).

4. - Tyre (1) according to Claim 3, **in which** the stiffening structure (7) is symmetric with respect to the equatorial plane (XZ).

5. - Tyre (1) according to any one of Claims 1 to 4, **in which** the axially outermost stiffening element (8) crown interface (81) is positioned, with respect to the equatorial plane (XZ), at an axial distance A at most equal to 0.15 times and at least equal to 0.05 times the axial width S.

6. - Tyre (1) according to any one of Claims 1 to 5, **in which** the radially outermost stiffening element (8) bead interface (82) is positioned, with respect to a radially innermost point (I) of the axially inner face of the bead (41), at a radial distance B at most equal to 0.10 times, preferably at most equal to 0.05 times the radial height H.

7. - Tyre (1) according to any one of Claims 2 to 6, **in which** the stiffening structure (7) is made up of mutually identical stiffening elements (8).

8. - Tyre (1) according to any one of Claims 1 to 7, **in which** any stiffening element (8) comprises a polymeric material, such as an aliphatic polyamide, an aromatic polyamide or a polyester, or a metal material, such as steel, or a glass- or carbon-type material or any combination of the above materials.

9. - Tyre (1) according to any one of Claims 1 to 8, **in which** any stiffening element (8) is a two-dimensional element.

10. - Tyre (1) according to Claim 9, **in which** any two-dimensional stiffening element (8) is made up of a reinforcing fabric comprising reinforcing elements coated in an elastomer compound.

11. - Tyre (1) according to any one of Claims 1 to 8, **in which** any stiffening element (8) is a one-dimensional element of filament or cord type.
